# EUROPEAN PATENT APPLICATION

(11) **EP 1 486 387 A2**
(43) Date of publication of application: **15.12.2004**
(21) Application number: 04253368.7
(22) Date of filing: 04.06.2004
(51) Int. Cl.: B60S 1/04, B60S 1/34

(54) **Impact safety arrangement for windscreen wiper system**

(30) Priority: 10.06.2003 GB 0313359; 08.07.2003 GB 0315918; 09.07.2003 GB 0316062
(71) Applicant: TRICO LIMITED, South Wales, NP4 0XZ (GB)
(72) Inventor: Gower, Michael J., Luton, Bedfordshire LU4 9HE (GB)
(74) Representative: Britter, Keith Palmer

(57) **Abstract**

An impact safety arrangement (1) for a windscreen wiper system, comprising a pivot (20) having its otherwise free end attachable to one end of a windscreen wiper arm, and complementary latching means including a first latching member (2) associated with the windscreen wiper arm pivot (20) or a component, such as a pivot shaft or pivot housing (20), associated therewith, and a second latching member (3) which, when engaged with the first latching member (2), retains the pivot (20) in its operative position and which is disengeagable from the first latching member (2) when the pivot (20) is subjected to a generally axial impacting force, to allow the pivot (20) to move from its operative position.

## Description

This invention relates to an impact safety arrangement for a windscreen wiper system and is especially, but not exclusively, related to such an arrangement for reducing injuries incurred by a pedestrian impacting with a windscreen wiper system, particularly the forwardly projecting pivot attached to one end of a windscreen wiper arm.

There are many safety arrangements for reducing injuries inflicted upon pedestrians by their impacting with windscreen wiper systems, the vast majority of which include frangible portions of the systems which allow the windscreen arm pivots, pivot shafts and/or pivot housings to detach from their mountings to the vehicle bodies and move rearwardly, when subjected to a generally axial impacting force thereon, to cushion that force, thereby tending to limit injuries to the impacting pedestrians.

Such conventional arrangements are expensive to manufacture and fit to vehicles and involve the breaking-away of certain components, such as the windscreen arm pivots, pivot shafts and/or pivot housings from the wiper systems, which, after being impacted by an external, generally axial force, require the replacement of the whole or major parts of the windscreen wiper systems.

It is an object of the present invention to provide a safety impact arrangement for use with windscreen wiper systems which overcomes, or at least substantially reduces, the disadvantages associated with conventional arrangements, as discussed above, as well as providing an arrangement which is comparatively inexpensive to manufacture, readily fitted to a vehicle and, in one example, may be reset to its operative condition after its having been subjected to an impact thereon.

Accordingly, one aspect of the invention provides an impact safety arrangement for a windscreen wiper system, comprising a pivot having its otherwise free end attachable to one end of a windscreen wiper arm, and complementary latching means including a first latching member associated with the windscreen wiper arm pivot or a component, such as a pivot shaft or pivot housing, associated therewith, and a second latching member which, when engaged with the first latching member, retains the pivot in its operative position and which is disengeagable from the first latching member when the pivot is subjected to a generally axial impacting force, to allow the pivot to move from its operative position.

Preferably, disengagement of the second latching member from the first latching member of the latching means is effected by rotational movement of the second latching member.

In an embodiment of the impact safety arrangement, the first and second latching members are shaped and dimensioned, such that, when they are engaged with each other, for example, by a snap or friction fit, a minimum impacting, generally axial force needs to be applied to the pivot, or associated component, such as the pivot shaft or pivot housing, for the latching members to disengage, thereby permitting further movement of the wiper arm pivot from its operating position.

The second latching member is preferably mounted rotatably to the associated vehicle to which the corresponding windscreen wiper system is fitted, such fitting preferably being a rotational axis.

Also, the second latching member of the complementary latching means may be connected, via, say, a suitable rotatable fixing, to an actuating element which is engaged by a complementary element associated with the wiper arm pivot, or an associated component thereof, and which, when the pivot is impacted by a generally axial force, and preferable one which is at least as great as the minimum predetermined force discussed above, is movable by the corresponding movement of the wiper arm pivot or associated component, to rotate the second latching member of the complementary latching means out of engagement with the first latching member of the pivot or associated component, to allow further movement of the wiper arm pivot from its operating position.

Additionally or alternatively, the second latching member. may comprise means, such as an arm, which is engaged or engageable by the pivot shaft or housing, such as the rear end thereof, so that when the wiper arm pivot is subjected to a sufficient impacting force, the arm or other means is moved, preferably rotatably, to disengage, or assist in the disengagement, of the first and second latching members of the complementary latching means.

In another embodiment, the complementary latching means comprises a latching ball and socket device of which one of the ball and socket is secured to, say, the pivot shaft or pivot housing and of which the other of the ball and socket is secured to a fixed support such as the chassis of an associated vehicle.

A second aspect of the invention resides in an impact safety arrangement for a windscreen wiper system, comprising a housing in which is mounted or mountable a pivot having its otherwise free end attachable to one end of a windscreen wiper arm, and a ball and socket device of which one of the ball and socket is secured to the pivot housing and of which the other of the ball and socket is secured to a fixed support, such as the chassis of an associated vehicle, whereby, with the ball fitted within the socket and when the pivot, and hence the pivot housing, is subjected to a generally axial impacting force, the ball and socket become separated from each other, to allow the pivot housing and associated pivot mounted therein to move rearwardly of the associated vehicle.

Thus, upon such separation, the pivot and associated pivot housing move rearwardly of the associated vehicle, to cushion the impacting force, thereby tending to limit injuries to the impacting pedestrian.

In order that the invention may be more fully understood, preferred embodiments in accordance therewith will now be described by way of example and with reference to the accompanying drawings in which:
Figure 1 is a side elevation of a first embodiment of safety impact arrangement;
Figure 2 is a plan view of the arrangement shown in Figure 1 along the line II-II;
Figure 3 is a plan view of the arrangement shown in Figure 1 along the line III-III;
Figure 4 is a side elevation of a second embodiment of safety impact arrangement;
Figure 5 is a plan view of a third embodiment of safety impact arrangement; and
Figure 6 is a side elevational view of the third embodiment of Figure 5.

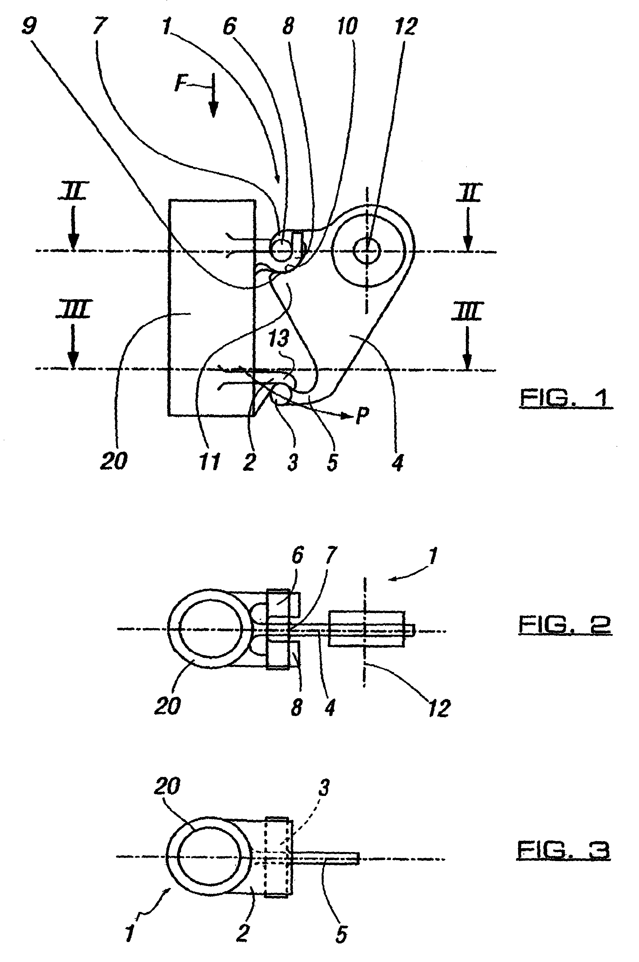

Referring firstly to Figures 1 to 3 of the drawings, a first embodiment of safety impact arrangement for a windscreen wiper system is shown generally at 1 and comprises a first latching member in the form of a hooked latch arm 2 secured at one end to a pivot housing 20 associated with a pivot (not shown) whose otherwise free end is attachable or attached to one end of a windscreen wiper arm (also not shown) in conventional manner.

A second latching member, in the form of a circularly cross-sectioned bar 3, is shaped and dimensioned to be complementary with the latch arm 2 and is shown engaged with the hooked end 13 thereof.

The second latching member bar 3 is connected to a generally triangularly-shaped fixing ear 4 via an arcuate arm 5.

The fixing ear 4 is provided with a further, circularly cross-sectioned bar 6 which is connected thereto by a further arm 7 and which engages within a generally U-shaped channel member 8 fixed, at its other end, to the pivot housing 20.

The underside surface 9 of the generally U-shaped channel member 8 is in engagement with the top surface 10 of a shoulder 11 of the ear 4.

The fixing ear 4 is mounted for rotation about an axis 12 to an associated vehicle (not shown).

The hooked latch arm 2 and the second latching member bar 3, and particularly the respective engaging surfaces thereof, more particularly in the region of the hooked end 13 of the latch arm 2, are shaped and dimensioned, such that they engage in a complementary manner by means of a snap or friction fit.

Such fit is adjusted, so that at least a minimum predetermined impacting axial force, in the direction of the arrow F, has to be applied to the wiper arm pivot, and hence the pivot housing 20, of the associated windscreen wiper system, before the latch arm 2 and latching member bar 3 can be disengaged from each other, with the latter moving in a circular path in the direction of the arrow P.

In this manner, the pivot housing 20, and associated wiper arm pivot of the windscreen wiper system, is maintained in its normal operating position.

Alternatively or additionally, the fixing ear 4 and/or its associated rotational axis 12 can be biased in a clockwise direction, to maintain or assist in maintaining the pivot housing 20, and hence the associated wiper arm pivot, in its normal operative position.

In that position, the bar 6 is engaged within the channel member 8.

When an impacting, generally axial force F of at least a predetermined minimum is applied to the pivot, and hence the pivot housing 20, such force urges the underside surface 9 of the channel member 8 against the abutting top surface 10 the shoulder 11 of the ear 4, resulting in a rearward movement of the pivot housing 20, resulting in rotation of the ear 4, such that the bar 3 moves accurately in the direction of the arrow P, to disengage from the latch arm 2. At the same time, the bar 6 at least begins to disengage for the channel member 8.

Such disengagement then allows the pivot housing 20, and associated wiper arm pivot, to move further rearwardly, thereby absorbing at least some of the impacting force F.

Subsequently, the arrangement can be reset by moving the pivot housing 20, and hence wiper arm pivot, forwardly into its normal operative position, again with the latching arrangement maintaining it in that position, via the rod 3 of the fixing ear 4 and the complementary engaging latch arm 2.

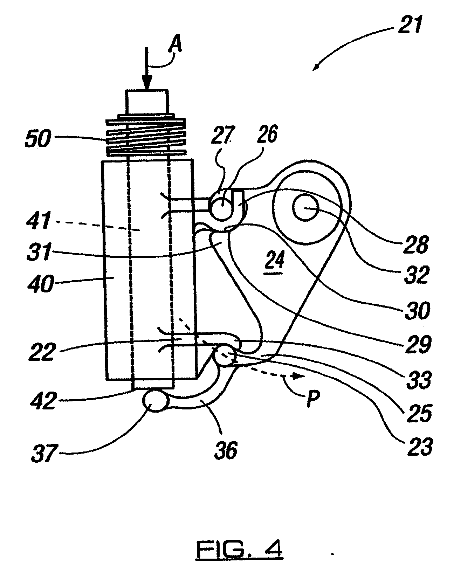

A second embodiment of safety impact arrangement for a windscreen wiper system is shown generally at 21 in Figure 4 and is similar to the first embodiment of safety impact arrangement 1 described above in relation to Figures 1 to 3, in that, it comprises a first latching member in the form of a hooked latched arm 22 secured at one end two a pivot housing 40 through which extends a pivot shaft 41 of a windscreen wiper arm pivot (not shown) whose free end is attachable or otherwise attached to one end of a windscreen wiper arm in conventional manner. A second latching member, in the form of a circularly cross-sectioned bar 23, is shaped and dimensioned to be complementary with the latch arm 22, the bar 23 being shown in Figure 4 engaged with the hooked end 33 of the arm 22. The second latching member bar 23 is connected to a generally triangularly-shaped fixing ear 24, via an accurate arm 25.

Again, the fixing ear 24 is provided with a further, circularly cross-sectioned bar 26 which is connected thereto by a further arm 27 and which engages within a generally U-shaped channel member 28 fixed at its other end to the pivot housing 40.

The underside surface 29 of the generally U-shaped channel member 28 engages with the top surface 30 of a shoulder 31 of the ear 24 which is mounted for rotation about an axis 32 to an associated vehicle (also not shown).

A compression spring or spring washer 50 acts between the pivot shaft 41, and hence the associated wiper arm pivot (not shown), and the pivot housing 40.

An arcuate extension arm 36 has one end connected to the arcuate arm 25, with its other, free end being provided with a spherical member 37 engaging the lower or rear end 42 of the pivot shaft 41.

When an impacting force, as represented by the arrow A, is applied to the front or top end of the wiper arm pivot, the pivot shaft 41 is urged rearwardly through the pivot housing 40 against the bias of the compression spring or spring washer 50. As a consequence, the rear or lower end 42 of the shaft 41, in engagement with the member 37, urges that member 37 downwardly or rearwardly, thereby unlatching or assisting in the unlatching of the bar 23 and hooked end 33 of the arm 22, with consequential rotation of the fixing ear 24, and disengagement of the bar 26 from the channel member 28, about the axis 32 in the direction of the arrow P.

The minimum force required to unlatch the arrangement can be predetermined by the shape and configuration of the bar 23 and hooked end 33 of the arm 22 and/or the biasing force exerted by the compression spring or compression washer 50 between the pivot housing 40 and pivot shaft 41.

Again, the latching arrangement can be reset, after it has been unlatched due to an impacting force upon the top or front end of the associated wiper arm pivot in the direction of the arrow A.

Thus, it can be seen that the invention provides an impact safety arrangement which is comparatively inexpensive to manufacture, readily fitted to a vehicle and resettable to its operative condition after its having been subjected to at least a minimum predetermined impacting force, thereby cushioning such force.

Also, it is to be appreciated that the first and second latching members 2, 3 and 22, 23 of the embodiments of impact safety arrangement described above in relation to Figures 1 to 4 of the drawings, can be replaced by any suitable complementary latching means which permits disengagement of the components thereof, when the associated pivot of the windscreen wiper system is subjected to at least a minimum impacting axial force.

It is to be appreciated further that the force required to disengage the first and second latching members of the complementary latching means, such as the hooked latch arm 2, 22 and bar 3, 23, might be dependent at least partially upon the materials from which those components, and any other associated components of the arrangement, are manufactured. In some initial tests, it has been found that aluminium may be a little too stiff for disengagement to occur at some impacting forces and it is considered that a plastics material might be more useful and flexible in that regard.

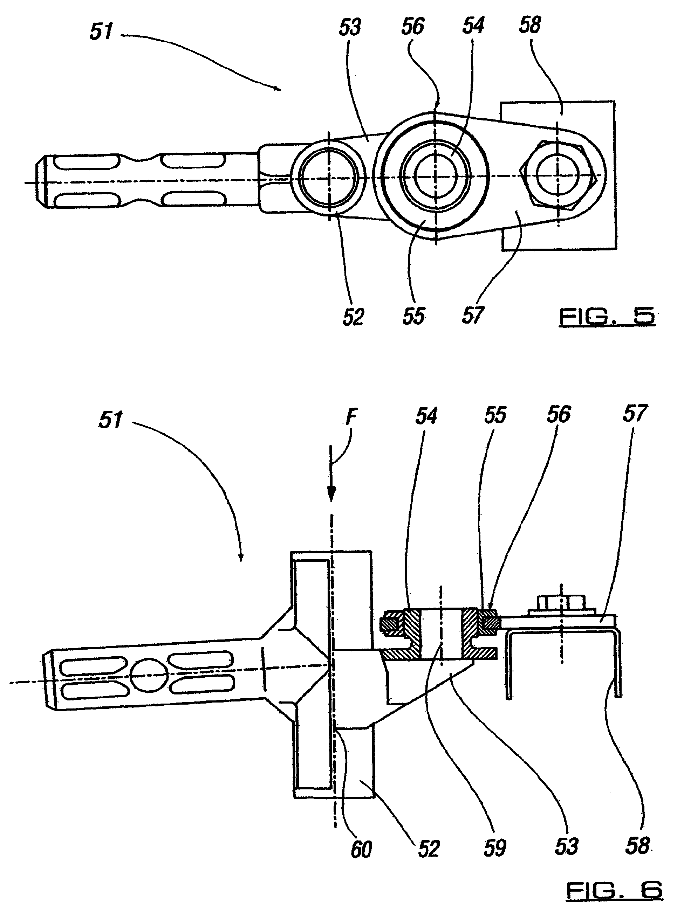

Referring now to Figures 5 and 6 of the drawings, an impact safety arrangement, indicated generally at 51, for a windscreen wiper system (not shown) of a vehicle, comprises a cast pivot housing 52 having formed integrally therewith a projecting arm 53 upon which is mounted, preferably fixedly, a ball portion 54 of a ball and socket device 56.

A socket portion 55 of that device 56 is mounted fixedly by a bracket 57 to the vehicle chassis represented by the component 58 and has the ball portion 54 received latchedly therein by a snap, friction or other fit. The axis 59 of the ball portion 54 and socket portion 55 lies parallel to the axis 60 of the pivot housing 52.

As shown in Figure 6, the socket portion 55 of the ball and socket device 56 may be a preformed component incorporated as an insert with the bracket 57.

The curvature of and other parameters associated with the mating or latching arcuate surfaces of the ball and socket portions 54 and 55 determine at least partially the axial force F impacting upon the pivot, and hence the pivot housing 52, which is required to cause the ball portion 54 to separate axially from the socket portion 55 of the ball and socket device 56 generally parallel to the force F and the axis 59 of the socket portion 55.

Additionally or alternatively, the materials from which the ball and socket portions 54 and 55 of the device 56 are made, can be used at least partially to determine the force necessary to separate the ball and socket portions 54 and 55, when the pivot, and hence associated pivot housing 52, is subjected to a generally axially impacting force.

For example, such materials may include a metallic or plastics material or any suitable combination thereof, depending upon particular operating parameters.

It is to be appreciated that the ball and socket portions 54 and 55 of the ball and socket device 56 may be transposed, so that the ball portion 54 is attached to the vehicle chassis 58 via the bracket 57, with the socket portion 55 attached to the protruding arm 53 of the pivot housing 52.

Further, the ball and socket device 56 may be reset after separation of the ball and socket portions 54 and 55 by re-inserting the ball portion 54 within the socket portion by, say, a snap fit.

Moreover, it is to be understood that the terms "ball" and "ball portion", as used in this specification, embrace not only substantially completely spherical elements but also partially spherical elements, such as the ball portion 54 of the ball and socket device 56 of the embodiment described above in relation to the drawings. Similar considerations apply to the terms "socket" and "socket portion", such as those used in relation to the socket portion 55 of the device 56.

## Claims

1. An impact safety arrangement for a windscreen wiper system, comprising a pivot having its otherwise free end attachable to one end of a windscreen wiper arm, and complementary latching means including a first latching member associated with the windscreen wiper arm pivot or a component, such as a pivot shaft or pivot housing, associated therewith, and a second latching member which, when engaged with the first latching member, retains the pivot in its operative position and which is disengeagable from the first latching member when the pivot is subjected to a generally axial impacting force, to allow the pivot to move from its operative position.

2. An arrangement according to claim 1, wherein the second latching member is arranged to be rotationally disengaged from the first latching member of said latching means.

3. An arrangement according to claim 1 or 2, wherein the first and second latching members are shaped and dimensioned, such that, when they are engaged with each other, a minimum impacting, generally axial force needs to be applied to the pivot, or associated component, such as the pivot shaft or pivot housing, for the latching members to disengage, thereby permitting further movement of the wiper arm pivot from its operating position.

4. An arrangement according to claim 1, 2 or 3, wherein the first and second latching members are engaged with each other by means of a snap or friction fit.

5. An arrangement according to any preceding claim, wherein the second latching member is mounted rotatably to the associated vehicle to which the corresponding windscreen wiper system is fitted.

6. An arrangement according to claim 5, wherein said fitting is a rotational axis of the second member.

7. An arrangement according to any preceding claim, wherein the second latching member of the complementary latching means is connected to an actuating element which is engaged by a complementary element associated with the wiper arm pivot, or an associated component thereof, and which, when the pivot is impacted by a sufficient, generally axial force, is movable by the corresponding movement of the wiper arm pivot or associated component, to rotate the second latching member of the complementary latching means out of engagement with the first latching member of the pivot or associated component, to allow further movement of the wiper arm pivot from its operating position.

8. An arrangement according to claim 7, wherein the second latching member is connected to the actuating element by a rotatable fixing.

9. An arrangement according to any preceding claim, wherein the second latching member comprises means which is engaged or engageable by the pivot shaft or housing, so that when the wiper arm pivot is subjected to a sufficient impacting force, said means is moved, to disengage, or assist in the disengagement, of the first and second latching members of the complementary latching means.

10. An arrangement according to claim 9, wherein said means comprises an arm.

11. An arrangement according to claim 9 or 10, wherein said means is movable rotatably.

12. An arrangement according to any preceding claim, wherein said complementary latching means comprises a latching ball and socket device of which one of the ball and socket is secured to the pivot shaft or pivot housing and of which the other of the ball and socket is secured to a fixed support, such as the chassis of an associated vehicle.

13. An arrangement according to claim 12, wherein the axes of the ball and socket are generally parallel to that of the pivot shaft or housing.

14. An impact safety arrangement for a windscreen wiper system, comprising a housing in which is mounted or mountable a pivot having its otherwise free end attachable to one end of a windscreen wiper arm, and a ball and socket device of which one of the ball and socket is secured to the pivot housing and of which the other of the ball and socket is secured to a fixed support, such as the chassis of an associated vehicle, whereby, with the ball fitted within the socket and when the pivot, and hence the pivot housing, is subjected to a generally axial impacting force, the ball and socket become separated from each other, to allow the pivot housing and associated pivot mounted therein to move rearwardly of the associated vehicle.

15. An arrangement according to claim 14, wherein upon separation of the ball and socket, the pivot and associated pivot housing are arranged to move rearwardly of the associated vehicle, to cushion the impacting force, thereby tending to limit injuries to the impacting pedestrian.

16. An arrangement according to claim 14 or 15, wherein the axis of at least the socket is generally parallel to that of the pivot and to the direction of any impacting force.

17. A windscreen wiper system incorporating an arrangement according to any preceding claim.

18. A vehicle fitted with a windscreen wiper system according to claim 17.
